# EUROPEAN PATENT SPECIFICATION

(11) **EP 0 432 085 B1**
(45) Date of publication and mention of the grant of the patent: **27.09.1995**
(21) Application number: 90630221.1
(22) Date of filing: 06.12.1990
(51) Int. Cl.: H02H 7/08, H02H 5/08

(54) **Protection for electrically driven device**
Schutz für elektrisch angetriebene Anlage
Protection pour dispositif à entraînement électrique

(30) Priority: 08.12.1989 US 449689
(43) Date of publication of application: 12.06.1991
(73) Proprietor: CARRIER CORPORATION, Syracuse New York 13221 (US)
(72) Inventor: d'Entremont, John R., Foxboro, Massachusetts 02035 (US); Wilson, James C., Cazenovia, New York 13035 (US); Fraser, Howard H., Jr., Lafayette, New York 13084 (US)
(74) Representative: Waxweiler, Jean

(56) References cited:
- DE-A- 3 421 314
- US-A- 4 456 941

## Description

The present invention relates to a system for protecting electric motor driven devices and, more particularly, to a protection circuit for a fluid machine such as a hermetic compressor, having an internal electric motor drive. Fluid machines can be classified in many ways. By function they are classified as: (1) compressors, where the fluid machine acts on a gas to increase its pressure and reduce its volume, (2) pumps, where the fluid machine does not reduce the volume of the fluid in the device but moves the fluid from one place to another but may increase the pressure of the fluid in forcing it into the place of delivery; and (3) expanders, where pressurized fluid acts on the fluid machine causing it to move while the fluid increases in volume and decreases in pressure such as where steam acts on a turbine. A compressor and an expander are basically the same device with reversed operation. A pump and a compressor differ basically in whether or not the volume of the fluid changes in the device. The same basic structure can thus act as a pump, compressor or expander for some types of fluid machines.

Where classified by operation, a fluid machine is either centrifugal, in which velocity is converted to pressure, or positive displacement, where a volume of fluid is trapped and compressed, expanded or just moved. The positive displacement fluid machines are classified as reciprocating, as where there is a reciprocating piston acting in a cylinder, or as rotary. Rotary includes: (1) screw compressors, where the fluid is trapped in spaces partially defined by the lobes and grooves of the rotors, or, for a single screw compressor, where the fluid is trapped in spaces partially defined by the rotor, (2) scroll compressors, where the fluid is trapped in spaces partially defined between the wraps of the fixed and orbiting scroll members; (3) rotary vane, where a piston carrying radial vanes is rotated in a cylinder with the fluid being trapped between vanes; (4) fixed vane, or rolling piston, where the vane reciprocates to maintain sealing contact with an eccentric piston, with the piston contacting the wall of the cylinder and the vane to define the trapped volumes.

When classified by their housing or casing, fluid machines are classified as open drive, semi-hermetic and hermetic. In open drive machines, the crankshaft extends through the shell in which the portion of the fluid machine that acts on the fluid is located, but the driving means is located outside of the shell. In semi-hermetic machines the entire machine is within the shell but is field serviceable by the removal of sealed panels. Hermetic machines are entirely located within the shell which is welded together.

When classified by use, fluid machines are used either in an open system, as where air is the fluid and is exhausted to the atmosphere, or in a closed system such as one using Freon or some other refrigerant which is continuously circulated through the system during operation. In a closed system with a fluid machine acting as a compressor of a refrigerant, and having a hermetic casing or shell, the shell will be filled with refrigerant. If all or most of the shell is filled with refrigerant at suction pressure, then the compressor is referred to as a low side compressor, while if the shell is filled with refrigerant at discharge pressure, it is referred to as a high side compressor.

Because of shell strength requirements, hermetic compressors are limited in size and are typically used only in residential and light commercial air conditioning and refrigeration applications. The shell is penetrated by the suction and discharge lines and by the electric power input. This is the minimum number of penetrations and therefore the minimum sealing requirement. The interior of the shell normally has very little unused space available because of the desire to minimize the cubage, weight, material costs, and the amount of refrigerant within the shell.

Compressor protection is achieved by interrupting power to the compressor when it is operating under an undesirable condition. This protection is normally achieved by a stator mounted, thermally responsive switch located in the power line to the motor. This switch responds to excess motor temperature and/or an overcurrent by opening and thereby breaking the electrical circuit to stop the compressor.

There are, however, other conditions under which it is desirable to stop compressor operation in order to protect the compressor. These conditions include high discharge temperature, excessive pressure ratio, high superheat, and loss of charge. In scroll compressors, specifically, these conditions may produce an excessive thermal gradient in the scroll members between the inlet and outlet due to the heating of the refrigerant during compression. Also, a scroll compressor is capable of reverse operation wherein it acts as an expander when reverse flow is permitted, or as a vacuum pump if flow is blocked. A check valve in the discharge line prevents the reverse flow necessary for expander operation but traps a volume which is evacuated by the reverse operation of the compressor which acts as a vacuum pump because the reverse flow is limited to the fluid in the trapped volume. Each of the above-identified thermally abusive conditions can be sensed either directly or indirectly through a thermal sensor. Reverse rotation and excessive pressure ratio can also be sensed through pressure sensors. The sensing of the temperature of the compressor discharge gas or of the central portion of the fixed scroll of a scroll compressor will provide an indication of compressor operation problems that can be due to a number of conditions, as indicated above, requiring compressor operation to be stopped, although the specific cause for the temperature increase will not necessarily be known. The reverse direction of rotation of the motor of a scroll compressor can be sensed as a low pressure/vacuum at the compressor discharge where the supply flow is blocked and it becomes desirable to stop the compressor in response thereto. Major problems in sensing other conditions and in stopping the compressor in response thereto are: the limited internal space available, the problems with additional penetration of the shell, cost, and the need to power the sensors and/or responsive circuitry.

Additional sensors are located within the shell of an enclosed, electric motor driven device. In the case of a hermetic scroll compressor, specifically, one sensor is provided to sense the temperature of the central portion of the fixed scroll or of the discharge gas, and another sensor is provided to sense the discharge pressure as indicative of the direction of rotation of the motor. The additional sensors are coupled to an internal line break such that if temperatures are exceeded in the fixed scroll or discharge gas, for any reason, or if the motor is running in reverse, the line break will trip. The additional sensors and responsive circuitry are powered from an auxiliary winding placed in the motor to yield a low voltage such as 12 or 24 volts. As an alternative to the pressure sensor being used in a fluid machine to detect reverse operation by the sensing of a low pressure condition, the sensor may be responsive to high pressure to sense other undesirable conditions. Also, the pressure sensor can be responsive to a differential pressure, or two pressure sensors can be used.

In US-A-4 456 941 there is disclosed a system for protecting a device according to the preamble of claim 1. More specifically, US-A-4 456 941 discloses a protection system for a device driven by an electric motor having an internal line break which is thermally responsive to a specific operating condition, in particular a temperature or overcurrent condition, of the motor and having at least one sensor for detecting a predetermined condition of said device and actuation means for actuating the line break to interrupt power to the motor in response to the sensor detecting a certain predetermined condition of the device. In this prior art system the actuation means mechanically connects the sensor to the line break.

The system for protecting a device of this invention is characterized by the features set forth in the characterizing part of claim 1.

According to the invention, the actuation means includes at least one heater thermally coupled to the line break for thermal actuation thereof, power means for providing power to the heater, and power connection means for connecting the power means to the heater in response to the sensor detecting the certain predetermined condition of the device.

In particular, additional sensors are located within the shell of an electric motor driven device. The sensors are thermally coupled to the existing internal line break protection system through auxiliary heater(s) in heat transfer relation with the line break and are powered by an auxiliary winding placed in the motor. The auxiliary heater(s) may be formed by bonding a resistive grid on a flexible sheet of electrically insulating material which is wrapped around the housing of the line break. A heat shrinkable sleeve of electrically insulating material may be placed over the grid and the connections of electrical leads to the grid.

For a fuller understanding of the present invention, reference should now be made to the following detailed description thereof taken in conjunction with the accompanying drawings wherein:
Figure 1 is a partial sectional view of a low side hermetic scroll compressor employing the present invention;
Figure 2 is a circuit diagram of a first embodiment of the present invention as applied to a single phase motor;
Figure 3 is a circuit diagram of a second embodiment of the present invention as applied to a single phase motor;
Figure 4 is a circuit diagram of the present invention as applied to a three phase motor;
Figure 5 is a perspective view of a line break device useful in the present invention having an auxiliary heater mounted in heat transfer relations therewith; and
Figure 6 is a cross sectional view of the Figure 5 device and heater.

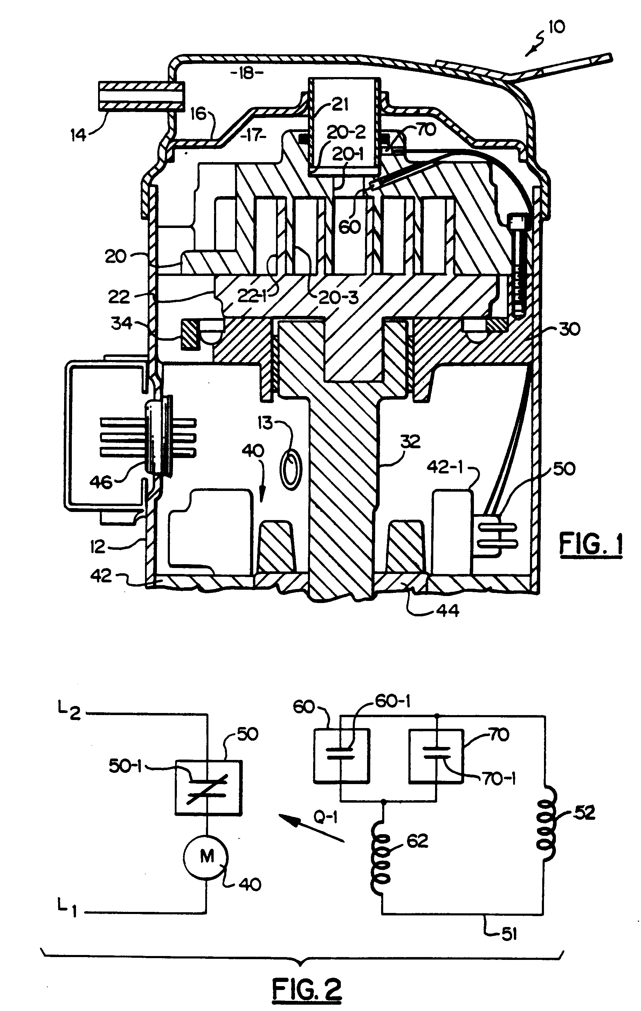

In Figure 1, the numeral 10 generally designates a low side hermetic scroll compressor having a shell 12 with an inlet 13 and a discharge 14 extending through shell 12. Divider plate 16 divides the interior of shell 12 into low side chamber 17 and discharge chamber 18. Scroll compressor 10 includes fixed scroll 20, orbiting scroll 22, crankcase 30, crankshaft 32, anti-rotation means 34 and motor 40 which is made up of stator 42 and rotor 44. Electrical power is supplied through hermetic terminal 46. An internal line break 50 is located on main motor windings or coils 42-1. The structure described so far is generally conventional. The present invention adds additional sensors which are located within shell 12 and coupled to internal line break 50. For a scroll compressor, desirable additional sensors would include a temperature sensor 60 for sensing the temperature at the central/discharge portion of fixed scroll 20 and a discharge pressure sensor 70 also located in the outlet portion of fixed scroll 20. The discharge path within shell 12 serially includes the bore 20-1 defining the central/discharge portion of fixed scroll 20, bore 20-2, tube 21 which is welded or otherwise sealed to divider plate 16, and discharge chamber 18 which connects to discharge 14. The temperature sensor 60 will directly sense the temperature of the fixed scroll 20 in its central/outlet portion 20-1 and indirectly sense the discharge temperature so that the sensed temperature can be influenced by the temperature of the compressed refrigerant which is, in turn, influenced by the pressure ratio across the compressor, high superheat, and loss of refrigerant charge. Additionally, upon reverse rotation, if reverse flow is blocked by a check valve (not illustrated) the compressor will pull a vacuum which is unique to reverse rotation and while the crankshaft 32 will continue to be lubricated, there will be no mass flow of refrigerant and entrained oil to lubricate and cool the scroll elements or wraps 20-3 and 22-1 so that they will heat up due to friction and provide a thermal indication of reverse rotation. Additionally, motor 40 may also overheat due to the absence of refrigerant gas passing over windings 42-1. Further, the pressure sensor 70 will sense the pressure of the refrigerant passing through discharge 20-1 in fixed scroll 20 which in the case of reverse rotation will be a low pressure or vacuum that must be sensed upstream of the check valve (not illustrated). If high pressure is being sensed internally of shell 12 it can be at any convenient point in the discharge flow path between central/outlet portion or discharge 20-1 and discharge 14. The low pressure/vacuum will, however, provide the earliest indication of reverse operation. A second pressure sensor would generally be required if both reverse rotation and high pressure are to be sensed or if just the differential pressure is to be sensed. A pressure sensor responsive to both high and low pressure can be used in addition to the low pressure sensor to sense both differential pressure and reverse rotation. If necessary, or desired, other or additional sensors such as oil temperature, oil level, high refrigerant pressure, etc. may be employed. It should be understood that the present invention is intended to be applicable to the use of any suitable sensor that senses a threshold condition, i.e. pressure, temperature, etc., of the compressor or other fluid machine and such sensors can be located at any of the various suitable locations within the system enclosure.

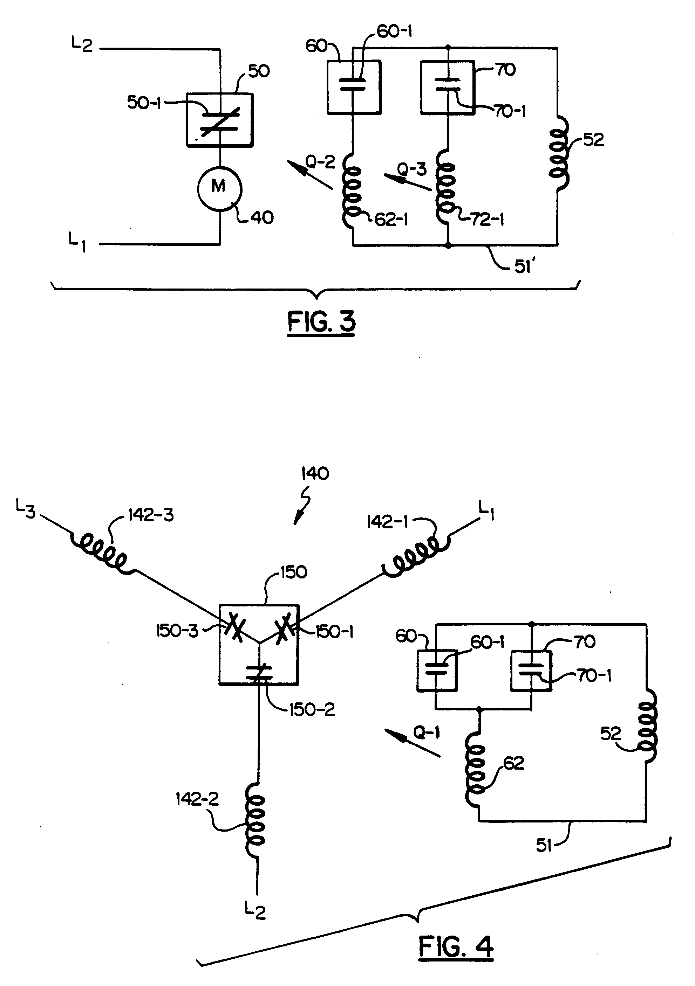

Referring now to Figure 2, L₁, and L₂ represent the electric line inputs which are connected to main winding 42-1 and run capacitor (not illustrated), of motor 40 in a circuit which contains internal line break switch 50, having normally closed thermally responsive contacts 50-1, as is conventional. A suitable internal line break is disclosed in U.S. Patent No. 4,376,926. Temperature sensor 60 has normally open thermostatically responsive contacts 60-1 and is located so as to be responsive to the temperature at the center of the fixed scroll 20 or, alternatively, at the discharge 20-1 but is, preferably, not exposed directly to the discharge gas or the pressure at discharge 20-1. Pressure sensor 70 has normally open pressure responsive contacts 70-1 and is located so as to be exposed to and responsive to the pressure at discharge 20-1 or any other convenient location in the discharge flow path in shell 12. Auxiliary winding 52 is placed within the stator slots but is insulated and separate from torque producing coils or windings 42-1. Auxiliary winding 52 is acted on by the alternating magnetic flux normally present in motor 40 and, as a result, an induced low voltage is produced in winding 52. The resultant low voltage, e.g. 12 or 24 volts, is supplied to the circuit 51 containing auxiliary winding 52, temperature sensor 60 and pressure sensor 70. In circuit 51 temperature sensor 60 and pressure sensor 70 are in parallel and in series with resistance heater 62 which is thermally coupled to the thermally responsive contacts 50-1 of internal line break 50. The circuit 51′ of Figure 3 is identical to circuit 51 of Figure 2 except that an additional resistance heater 72-1 is provided so that sensor 60 and its associated heater 62-1 is in parallel with sensor 70 and its associated heater 72-1. In the case of circuit 51′, both of the heaters 62-1 and 72-1 are thermally coupled to the thermally responsive contacts 50-1 of internal line break 50.

In Figure 2, the contacts 60-1 and 70-1 will be open so that circuit 51 is an open circuit under normal operating conditions. If temperature sensor 60 senses a temperature equal to or in excess of its actuation temperature, contacts 60-1 will close completing a circuit. As a result, coil 52 will supply electrical energy to resistance heater 62 producing enough heat, indicated by Q-1, to cause contacts 50-1 to open and thereby stop motor 40 and compressor 10. Assuming that pressure sensor 70 is to be responsive to reverse rotation, contacts 70-1 will close upon the creation of a very low pressure or vacuum in discharge 20-1 and this will complete a circuit to resistance heater 62 producing enough heat, indicated by Q-1, to cause contacts 50-1 to open and thereby stop motor 40 and compressor 10. If pressure sensor 70 is responsive to high pressure or a pressure differential, contacts 70-1 would close upon the sensing of the preset pressure or pressure difference but the operation of the circuit 51 and heater coil 62 would otherwise be the same.

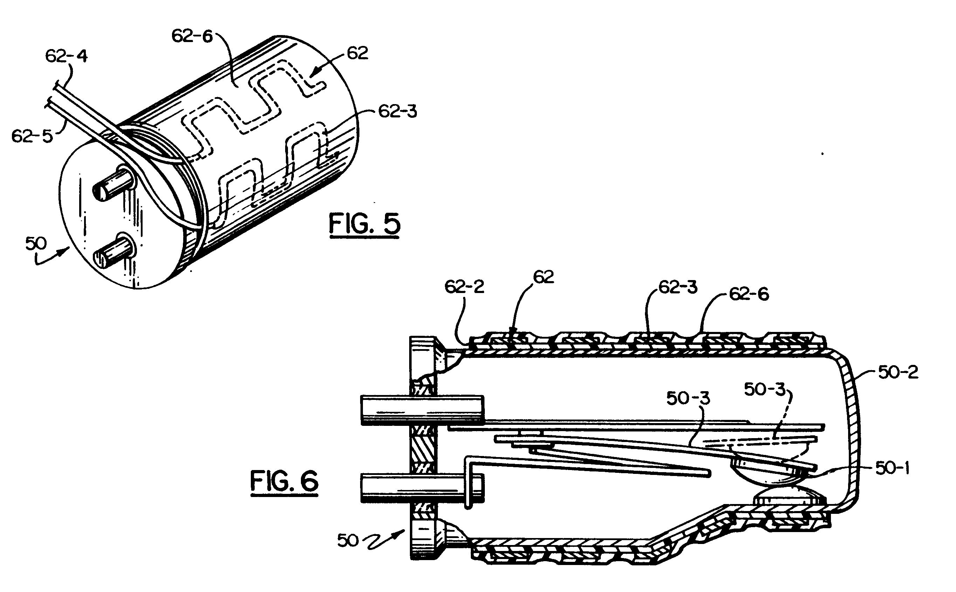

With particular reference to Figures 5 and 6 a line break 50 useful in practicing the present invention is shown comprising a tubular housing 50-2 of electrically and thermally conductive material such as low carbon steel. Normally closed contacts 50-1 are mounted on the housing wall on the free end of a cantilever mounted, thermally responsive snap-acting thermostat member 50-3 respectively. Upon over temperature or over current conditions of motor 40 snap-acting member 50-3 snaps to an open contacts position, indicated by the dashed lines in Figure 6, to de-energize the motor. Specific details of construction of line break or protector device 50 may be had by reference to U.S. Patent No. 4,376,926 mentioned above.

In addition to heating elements provided within line break 50 which are adapted to be connected to selected motor windings and in accordance with the present invention an auxiliary heater 62 is provided. Heater 62 comprises a flexible sheet 62-2 of high temperature resin, such as a polyimide polymer on which a grid 62-3 of resistive material has been disposed in a conventional manner, such as printing by silk screening a suitable ink to provide a resistance typically in the range of approximately 1 to 100 ohms. One heater of this type was made having a resistance of approximately 10 ohms. Other high temperature resins such as benzophenones, polyamideimide, polybenzothiazoles, phosphonitrilic, etc. may be used for sheet 62-2. The resistive material may be formed, for example, from a synthetic resin material of the type mentioned above but with particles of carbon, e.g. graphite and a minor amount of silver or nickel power interspersed therein.

Leads 62-4, 62-5 having electrically insulating sleeves thereon have end portions stripped of the insulating sleeves with end portions attached to opposite, spaced portions of grid 62-3 in a conventional manner, as by soldering. If more than one auxiliary heater is desired, as in the Figure 3 embodiment referred to above, two or more resistive paths are provided in grid 62-3 with appropriate leads for connecting the heaters in circuit 51. Sheet 62-2 is preferably provided with an adhesive underlayer and is wrapped about at least a portion or preferably about essentially the entire circumference of tubular housing 50-2 in close heat transfer relation therewith. Preferably a heat shrinkable sleeve 62-6 of electrically insulating material such as polyethylene terephthalate is placed over the printed heater grid 62-3 and is shrunk thereon to provide suitable over surface electrical clearance between the heater and leads and the line break 50 as well as strain relief for the leads.

Thus in the Figure 2 embodiment when contacts 60-1 or 70-1 are closed the low voltage power source energizes auxiliary heater 62 raising its temperature with the heat generated thereby being conducted to the heat responsive member 50-3 to actuate the line break and open contacts 50-1.

Referring to Figure 3, the operation of the device is similar to that of the Figure 2. The closing of contacts 70-1 will cause heating of heater 72-1 rather than heater 62-1 but the resultant heat, indicated by Q-3, will cause contacts 50-1 to open and thereby stop motor 40 and compressor 10. The closing of contacts 60-1 will cause the heating of heater 62-1 and the resultant heat, indicated by Q-2, will cause contacts 50-1 to open and thereby stop motor 40 and compressor 10.

Referring now to Figure 4, L₁, L₂ and L₃ are the electric line inputs for a 3-phase motor 140 and contain main windings 142-1 to 3, respectively, which are connected in a wye configuration and contain normally closed thermally responsive contacts 150-1 through 3, respectively, which collectively make up internal line break 150. Auxiliary winding 52 is placed within the stator slots of any one of windings 142-1 to 3. Winding 52 is insulated and supplies a low voltage, e.g. 12 or 24 volts, to the circuit 51 which is identical to that of Figure 2 and contains auxiliary winding 52, temperature sensor 60 and pressure sensor 70. Because internal line break 150 has multiple thermally responsive contacts, 150-1 through 3, the heat Q-1 produced by resistance heater 62 acts on all of the contacts, 150-1 through 3. Otherwise, the operation of the Figure 4 embodiment is the same as that of the Figure 2 embodiment. Also, circuit 51′ of Figure 3 can be used in the Figure 4 device and would operate as described above.

## Claims

1. A system for protecting a device (10) driven by an electric motor (40; 140) having an internal line break (50; 150) which is thermally responsive to a specific operating condition, in particular a temperature or overcurrent condition, of said motor (40; 140) said system having:
at least one sensor (60, 70) for detecting a predetermined condition of said device (10), and
actuation means (52, 62; 52, 62-1, 72-1) for actuating said line break (50; 150) to interrupt power to said motor (40; 140) in response to said sensor (60, 70) detecting a certain predetermined condition of said device (10),
characterized in that said actuation means includes:
at least one heater (62; 62-1, 72-1) thermally coupled to said line break (50; 150) for thermal actuation thereof;
power means (52) for providing power to said heater (62; 62-1, 72-1); and
power connection means (60-1, 70-1) for connecting said power means (52) to said heater (62; 62-1, 72-1) in response to said sensor (60, 70) detecting said certain predetermined condition of said device (10).

2. The protection system of claim 1, characterized in including a plurality of sensors (60, 70) for detecting various predetermined conditions of said device (10) with each of said sensors (60, 70) causing said actuation means to interrupt power to said motor (40;140) in response to the detection of a certain predetermined condition.

3. The protection system of claim 1, characterized in that said device (10) includes an enclosing shell (12) and said power means (52) is disposed entirely within said shell (12).

4. The protection system of claim 3, characterized in that said power means (52) comprises an auxiliary winding (52) within said motor (40;140) for supplying power to said at least one heater (62;62-1,72-1).

5. The protection system of said claim 1, characterized in that said sensor (70) is a pressure sensor (70).

6. The protection system of claim 5, characterized in that said device (10) is a fluid machine having a gas discharge path and said sensor (70) is located to sense pressure in said gas discharge path.

7. The protection system of claim 6, characterized in that said sensor (70) is adapted to detect a low pressure condition indicative of reverse rotation of said fluid machine.

8. The protection system of claim 1, characterized in that said sensor (60) is a temperature sensor (60).

9. The protection system of claim 8, characterized in that said device (10) includes a discharge path and said sensor (60) is located so as to detect temperature in said discharge path.

10. The protection system of claim 1, characterized in that said power connection means (60-1,70-1) includes at least one switch with normally open contacts (60-1,70-1) which are closed in response to the detection of a certain predetermined operating condition.

11. The protection system of claim 10, characterized in including a plurality of switches (60-1,70-1) disposed in parallel relationship such that any one of said plurality of switches (60-1, 70-1) can function to connect said power means (52) to said heater (62; 62-1, 72-1) to actuate said line break (50;150).

## Patentansprüche

1. System zum Schutze einer Vorrichtung (10), die durch einen elektrischen Motor (40; 140) angetrieben wird, das einen internen Leitungsunterbrecher (50; 150) hat der thermisch auf eine besondere Betriebsbedingung, insbesondere eine Temperatur- oder Überstrombedingung, von diesem Motor (40; 140) reagiert, wobei das System aufweist:
mindestens einen Sensor (60, 70) um eine vorgegebene Bedingung der Vorrichtung (10) festzustellen, und
eine Betätigungseinrichtung (52, 62; 52, 62-1, 72-1) zum Betätigen des Leitungsunterbrechers (50; 150), um den Strom zum Motor (40; 140) zu unterbrechen als Reaktion darauf, wenn der Sensor (60, 70) eine bestimmte vorgegebene Bedingung der Vorrichtung (10) feststellt,
dadurch gekennzeichnet, dass die Betätigungseinrichtung umfasst:
mindestens ein Heizelement (62; 62-1, 72-1), das thermisch mit dem Leitungsunterbrecher (50; 150) verbunden ist für eine thermische Betätigung desselben;
eine Stromeinrichtung (52), um Strom an das Heizelement (62; 62-1, 72-1) zu liefern; und eine Verbindungseinrichtung (60-1, 70-1) für Strom, um die Stromeinrichtung (52) in Abhängigkeit des Sensors (60, 70), der die bestimmte vorgegebene Bedingung der Vorrichtung (10) feststellt, mit dem Heizelement (62; 62-1, 72-1) zu verbinden.

2. Schutzsystem nach Anspruch 1, dadurch gekennzeichnet, dass es eine Vielzahl von Sensoren (60, 70) zum Feststellen von verschiedenen vorgegebenen Bedingungen der Vorrichtung (10) umfasst, wobei jeder der Sensoren (60, 70) bewirkt, dass die Betätigungseinrichtung den Strom zum Motor (40; 140) als Reaktion auf die Feststellung einer bestimmten vorgegebenen Bedingung unterbricht.

3. Schutzsystem nach Anspruch 1, dadurch gekennzeichnet, dass die Vorrichtung (10) eine umhüllende Verschalung (12) umfasst und die Stromeinrichtung (52) vollständig innerhalb der Verschalung (12) angeordnet ist.

4. Schutzsystem nach Anspruch 3, dadurch gekennzeichnet, dass die Stromeinrichtung (52) eine Hilfswindung (52) innerhalb des Motors (40; 140) umfasst, um Strom an das mindestens eine Heizelement (62; 62-1, 72-1) zu liefern.

5. Schutzsystem nach Anspruch 1, dadurch gekennzeichnet, dass der Sensor (70) ein Drucksensor (70) ist.

6. Schutzsystem nach Anspruch 5, dadurch gekennzeichnet, dass die Vorrichtung (10) eine Fluidmaschine ist, die einen Austrittspfad für Gas hat, und der Sensor (70) so angeordnet ist, um den Druck im Austrittspfad für Gas zu messen.

7. Schutzsystem nach Anspruch 6, dadurch gekennzeichnet, dass der Sensor (70) angepasst ist, um eine Bedingung mit tiefem Druck festzustellen, die auf eine umgekehrte Drehung der Fluidmaschine hinweist.

8. Schutzsystem nach Anspruch 1, dadurch gekennzeichnet, dass der Sensor (60) ein Temperatursensor (60) ist.

9. Schutzsystem nach Anspruch 8, dadurch gekennzeichnet, dass die Vorrichtung (10) einen Austrittspfad umfasst und der Sensor (60) so angeordnet ist, um die Temperatur im Austrittspfad zu messen.

10. Schutzsystem nach Anspruch 1, dadurch gekennzeichnet, dass die Verbindungseinrichtung (60-1, 70-1) für Strom mindestens einen Schalter mit normalerweise offenen Kontakten (60-1, 70-1) umfasst, die als Reaktion auf die Feststellung einer bestimmten vorgegebenen Betriebsbedingung geschlossen werden.

11. Schutzsystem nach Anspruch 10, dadurch gekennzeichnet, dass es eine Vielzahl von Schaltern (60-1, 70-1) umfasst, die derart in paralleler Beziehung angebracht sind, dass irgend einer aus der Vielzahl von Schaltern (60-1, 70-1) funktionieren kann, um die Stromeinrichtung (52) mit dem Heizelement (62; 62-1, 72-1) zu verbinden und damit den Leitungsunterbrecher (50; 150) zu betätigen.

## Revendications

1. Un système de protection d'un dispositif (10) entraîné par un moteur électrique (40; 140) comportant un interrupteur interne (50; 150) qui est thermiquement sensible à une condition de fonctionnement spécifique, en particulier une condition de température ou de courant de surcharge, dudit moteur (40; 140), ledit système comprenant:
au moins un détecteur (60, 70) pour détecter une condition prédéterminée dudit dispositif (10), et
un moyen de déclenchement (52, 62; 52, 62-1, 72-1) pour déclencher ledit interrupteur (50; 150) pour interrompre l'alimentation dudit moteur (40; 140) en réponse audit détecteur (60, 70) détectant une certaine condition prédéterminée dudit dispositif (10),
caractérisé en ce que ledit moyen de déclenchement comprend:
au moins un dispositif de chauffage (62; 62-1, 72-1) thermiquement couplé audit interrupteur (50;150) pour le déclenchement thermique de celui-ci;
un moyen d'alimentation (52) pour fournir une alimentation audit dispositif de chauffage (62; 62-1, 72-1); et
un moyen de connexion de l'alimentation (60-1, 70-1) pour connecter ledit moyen d'alimentation (52) audit dispositif de chauffage (62; 62-1, 72-1) en réponse audit détecteur (60, 70) détectant ladite condition prédéterminée en question dudit dispositif (10).

2. Le système de protection de la revendication 1, caractérisé en ce qu'il comprend une pluralité de détecteurs (60, 70) pour détecter diverses conditions prédéterminées dudit dispositif (10), chacun desdits détecteurs (60, 70) faisant en sorte que ledit moyen de déclenchement interrompe l'alimentation dudit moteur (40; 140) en réponse à la détection d'une certaine condition prédéterminée.

3. Le système de protection de la revendication 1, caractérisé en ce que ledit dispositif (10) comprend une enveloppe d'enceinte (12) et ledit moyen d'alimentation (52) est situé entièrement à l'intérieur de ladite enveloppe (12).

4. Le système de protection de la revendication 3, caractérisé en ce que ledit moyen d'alimentation (52) comprend un enroulement auxiliaire (52) à l'intérieur dudit moteur (40; 140) pour fournir une alimentation audit "au moins un" dispositif de chauffage (62; 62-1, 72-1).

5. Le système de protection de la revendication 1, caractérisé en ce que ledit détecteur (70) est un détecteur de pression (70).

6. Le système de protection de la revendication 5, caractérisé en ce que ledit dispositif (10) est une machine à fluide ayant une trajectoire de décharge des gaz et ledit détecteur (70) est situé de façon à détecter la pression dans ladite trajectoire de décharge des gaz.

7. Le système de protection de la revendication 6, caractérisé en ce que ledit détecteur (70) est adapté à la détection d'une condition de basse pression indicative d'une rotation inverse de ladite machine à fluide.

8. Le système de protection de la revendication 1, caractérisé en ce que ledit détecteur (60) est un détecteur de température (60).

9. Le système de protection de la revendication 8, caractérisé en ce que ledit dispositif (10) comprend une trajectoire de décharge et ledit détecteur (60) est situé de façon à détecter la température dans ladite trajectoire de décharge.

10. Le système de protection de la revendication 1, caractérisé en ce que ledit moyen de connexion de l'alimentation (60-1, 70-1) comprend au moins un commutateur avec des contacts normalement ouverts (60-1, 70-1) qui sont fermés en réponse à la détection d'une certaine condition de fonctionnement prédéterminée.

11. Le système de protection de la revendication 10, caractérisé en ce qu'il comprend une pluralité de commutateurs (60-1, 70-1) disposés en parallèle de sorte que n'importe lequel des commutateurs de ladite pluralité de commutateurs (60-1, 70-1) peut fonctionner de façon à connecter ledit moyen d'alimentation (52) audit dispositif de chauffage (62; 62-1, 72-1) pour déclencher ledit interrupteur (50; 150).
